# EUROPEAN PATENT APPLICATION

(11) **EP 0 588 359 A2**
(43) Date of publication of application: **23.03.1994**
(21) Application number: 93115011.4
(22) Date of filing: 17.09.1993
(51) Int. Cl.: H02B 13/035, H02G 5/06, H01J 33/02

(54) **Gas-insulated apparatus**

(30) Priority: 18.09.1992 JP 249256/92; 25.05.1993 JP 122385/93
(71) Applicant: MITSUBISHI DENKI KABUSHIKI KAISHA, Tokyo 100 (JP)
(72) Inventor: Hama, Hiroyuki, c/o Mitsubishi Denki K.K. Seisan, Amagasaki-shi, Hyogo-ken 661 (JP); Nakanishi, Koichiro, c/o Mitsub. Denki K.K. Seisan, Amagasaki-shi, Hyogo-ken 661 (JP); Miyata, Hideki, c/o Mitsubishi Denki K.K. Itami, Amagasaki-shi, Hyogo-ken 661 (JP)
(74) Representative: KUHNEN, WACKER & PARTNER

(57) **Abstract**

Spacers for supporting the lead conductors are coated with insulating layers, such as fluoride resin or the like having a lower dielectric constant than that of epoxy resin forming the insulated spacers, and thereby, localized concentrations of electric field is relaxed in the vicinity of the intruding electrically-conductive foreign particle; and surface discharge is suppressed.

## Description

### FIELD OF THE INVENTION AND THE RELATED ART STATEMENT

### 1. FIELD OF THE INVENTION

The present invention generally relates to a gas-insulated apparatus which is filled with an insulating gas into an inside space of a hermetically-sealed metal enclosure. In particular, it is concerned with such a gas-insulated apparatus as switchgear, disconnecting switch, grounding switch as well as ion accelerator.

### 2. DESCRIPTION OF THE PRIOR ART

The prior art gas-insulated apparatus is configured by accommodating a lead conductor to which a high voltage is applied in an inside space of a metal enclosure filled with an insulating gas as disclosed, for instance, by the Japanese patent publication (Tokkai) Sho No. 60-28216. The lead conductor accommodated in the above-mentioned metal enclosure is supported by an insulated supporting member such as an insulated spacer secured to the metal enclosure and thus is fixed to the metal enclosure in an electrically-insulated state.

In the prior art gas-insulated apparatus, an epoxy resin has generally been employed as a material for the previously-described insulated spacer in view of its mechanical strength and its electrical performance. The epoxy resin however has a higher dielectric constant as compared with the other resins. For this reason, when electrically-conductive foreign particles intruded into the space inside the metal enclosure would be energized at an application of a high voltage to the lead conductor and adhere to the insulated spacer made of the epoxy resin, a localized concentration of the electric field would occur in the vicinity of the adhered spot, and there would arise such a problem that a surface discharge thus occurs along the insulated spacer.

### OBJECTS AND SUMMARY OF THE INVENTION

The present invention has been made in order to solve the above-mentioned problem, and has, as its object, a provision of a gas-insulated apparatus that can relax the localized concentration of the electric field in the vicinity of the adhered spot even when the electrically-conductive foreign particles are adhered to the surface of the insulated spacer, and can suppress the deterioration in the insulating performance of the insulated spacer.

According to the present invention, there is provided, a gas insulated apparatus, comprising;
a hermetically-sealed metal enclosure kept substantially to the ground potential and filled with an insulating gas,
a plurality of lead conductors accommodated in the inside space of the hermetically sealed metal enclosure for being applied with a high voltage,
a plurality of insulated supporting members secured to the hermetically-sealed metal enclosure, for supporting the lead conductors in a state spaced apart and insulated from the enclosure, and
a plurality of insulating layers each of which has a lower specific dielectric constant than that of the insulated supporting members and coats on at least a part of the surface of the insulated supporting members.

A typical example of the above-stated gas-insulated apparatus is a gas-insulated switchgear having said plurality of insulated supporting members, wherein said insulating layers are coated on the surfaces of the lower halves of the insulated supporting members.

In addition to the above-defined parts and component, the gas-insulated apparatus of the present invention preferably comprises;
at least one switching unit accommodated in the inside space of said hermetically-sealed metal enclosure and connected to said lead conductors, for making and breaking a current path to said lead conductors,
at least one insulated manipulation rod connected to said switching unit, for driving said switching unit from the outside of said hermetically-sealed metal enclosure, and
at least one insulating layer having a specific dielectric constant which is lower than that of the material for forming said insulated manipulation rod coating at least a part of the surface of the insulated manipulation rod.

In the above-mentioned gas-insulated switchgear, each of said insulating layers preferably comprises a plural layers which are of materials having a lower specific dielectric constants than the specific dielectric constant of the material for forming said insulated supporting members and are laminated one over another on at least a part of the surface of the insulated supporting members.

Said plural insulating layers may be laminated one over the other, in a manner that, the farther a location of given layer from the surface of the insulated supporting member is, the lower is the specific dielectric constant of the given layer.

In the case of laminating said plurality of insulating sub-layers, ones of said plural insulating layers preferably coats the entire surface of insulated supporting members and the others of said insulating layers preferably coats the surfaces of the lower halves of the insulated supporting members.

In the above-mentioned gas-insulated switchgear, the hermetically-sealed metal enclosure may comprises a plurality of cylindrical unit metal enclosures axially connected with one another. In the stated case, the plurality of lead conductors are arranged linearly along an approximate centerline of the cylindrical unit enclosures.

In the above-mentioned gas-insulated switchgear, the insulated supporting members are preferably insulation spacers each having a disc shape and secured to said hermetically-sealed metal enclosure at their circumferences, for supporting said lead conductors at their centers.

In the above-mentioned gas-insulated switchgear, the insulated supporting members may alternatively be solid insulated supporting members each having a column shape, secured to said hermetically-sealed metal enclosure at their proximal ends, for supporting said lead conductors at their distal ends.

According to another aspect of the present invention, there is provided a an ion accelerator comprising:
a hermetically-sealed metal enclosure kept substantially to the ground potential and filled with an insulating gas,
a small chamber kept in vacuum, and accommodated in the inside space of said hermetically-sealed metal enclosure,
an ion generating means, including a high voltage electrode for serving as an ion source, and a bias electrode for controlling an ion beam emitted from said high voltage electrode, accommodated in said small chamber,
insulated supporting members, for supporting said high voltage electrode in a state spaced apart and insulated from said metal enclosure, and
a plurality of insulating layers each of which has a lower dielectric constant than that of said insulated supporting members and coats at least a part of the surface of the insulated supporting members.

In the above-mentioned gas-insulated ion accelerator, said insulated supporting member comprises;
an insulation spacer of generally cylindrical shape, for surrounding said high voltage electrode in a state spaced apart and insulated from said metal enclosure, and
an insulation bushing of generally column shape projecting inwards from an end wall of the metal enclosure, for directly supporting said high voltage electrode in said small chamber.

As in the previously-mentioned gas-insulated switchgears, each of said insulating layers employed in the just-mentioned gas-insulated ion accelerator may comprise plural layers, which are of materials having a lower specific dielectric constant than the specific dielectric constants of the material for forming said insulated supporting members and is laminated one over the another on at least a part of the surface of the insulated supporting members.

Said plural insulating layers is preferably laminated one over the other on at least part of the surface of the insulated supporting member in a manner that, the farther a location of a given layer from the surface of the insulated supporting member is, the lower is the specific dielectric constant of the given layer.

By applying a high voltage to the lead conductor in the metal enclosure, the electrically-conductive foreign particles or small pieces are in general energized to travel over the inside bottom of the metal enclosure and to adhere to the surface of the insulated supporting member such as the insulated spacer and the insulated manipulation rod.

In the gas-insulated apparatus built in accordance with the present invention, the insulated supporting member is however coated with the insulation layer of the material having a lower dielectric constant than the dielectric constant of the insulated supporting member. Therefore, the present invention has an advantage in that it can provide a highly reliable gas-insulated apparatus having both the electric performance as well as the mechanical strength. The provision of the insulation layer can relax the localized concentration of the electric field in the vicinity of the electrically-conductive foreign particles on the insulation layer, as compared with that in the prior art apparatus. It can also suppress the occurrence of the surface discharge due to the adherence of the electrically-conductive foreign particles to the insulated supporting member such as the insulated spacer and the insulated manipulation rod.

While the novel features of the present invention are set fourth particularly in the appended claims, the invention, both as to organization and content, will be better understood and appreciated, along with other objects and features thereof, from the following detailed description taken in conjunction with the attached drawings.

### BRIEF DESCRIPTION OF THE DRAWINGS

FIG.1 is a cross-sectional side view of a gas-insulated switchgear built in accordance with a first embodiment of the present invention.

FIG.2 is a cross-sectional front view of the gas-insulated switchgear shown by FIG.1, cut along a plane including the line II - II of FIG.1.

FIG.3 is a cross-sectional side view of a gas-insulated switchgear built in accordance with a second embodiment of the present invention.

FIG.4 is a cross-sectional front view of the gas-insulated switchgear shown by FIG.3, cut along a plane including the line IV - IV of FIG.3.

FIG.5 is a cross-sectional front view of a gas-insulated switchgear built in accordance with a third embodiment of the present invention.

FIG.6 is a cross-sectional side view of a gas-insulated switchgear built in accordance with a fourth embodiment of the present invention.

FIG.7 is a cross-sectional front view of the gas-insulated switchgear shown by FIG.6.

FIG.8 is a cross-sectional side view of a gas-insulated ion accelerator, built in accordance with a fifth embodiment of the present invention.

FIG.9 is a cross-sectional side view of a gas-insulated switchgear built in accordance with a sixth embodiment of the present invention.

FIG.10 is a cross-sectional side view of a gas-insulated switchgear built in accordance with a seventh embodiment of the present invention.

FIG.11 is a cross-sectional front view of the gas-insulated switchgear shown by FIG.10, cut along a plane including the line XI - XI of FIG.1.

It will be recognized that some or all of the Figures are schematic representations for purposes of illustration and do not necessarily depict the actual relative sizes or locations of the elements shown.

### DETAILED DESCRIPTION OF THE PREFERRED EMBODIMENTS

In the following paragraphs, the present invention will be described in more detail by way of example with reference to the preferred embodiments shown in the attached drawings.

### 〈〈EXAMPLE 1〉〉

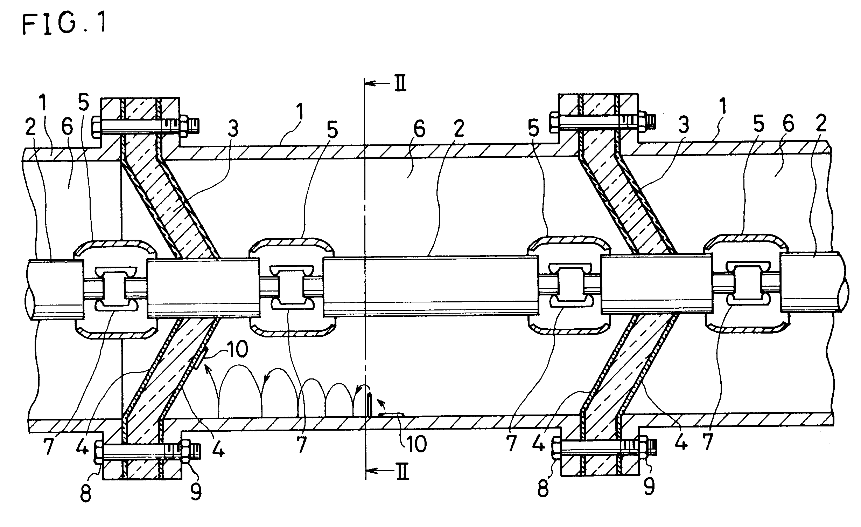

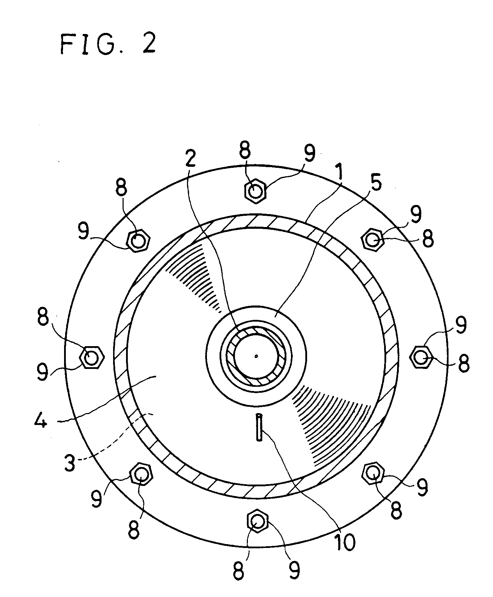

FIG.1 is a longitudinal cross-sectional side view of a gas-insulated switchgear built in accordance with a first embodiment of the present invention, and FIG.2 is a cross sectional front view of the gas-insulated switchgear shown by FIG.1, cut along a plane including the line II - II in FIG.1.

Referring now to FIG.1, there are shown a unit metal enclosure 1 of generally cylindrical shape filled with an insulating gas 6. The unit metal enclosure 1 accommodates a plurality of lead conductors 2, which are arranged linearly along the axis of the enclosure 1 and to which a high voltage is applied. These lead conductors are electrically connected with one another by a plurality of contact fingers 7 and a plurality of electric field relaxation shielding members 5 are provided around these contact fingers 7. These conductors 2 are supported by a plurality of insulation spacers 3 of generally a disc shape as insulated supporting members, which are secured to the metal enclosure 1 by a plurality of bolts 8 and nuts 9 at their circumference, and thus fixed to the metal enclosure 1 in an insulated state. These insulation spacers 3 are made of an insulating material having both the mechanical strength and the excellent voltage breakdown performance, for instance, an epoxy resin. Specific dielectric constant of the epoxy resin is however high as compared with other resins, and is typically a value above 4. And thus a localized concentration of the electric field may sometimes occur on its surface by an adhesion of electrically-conductive foreign particles.

In order to cope with this situation, the surfaces of the insulation spacers 3 are entirely coated with an insulating layer 4 of a material having a lower specific dielectric constant than that of the material forming the insulation spacer 3.

As the material for the insulating layers 4, there is employed one selected from a fluoride resin of a copolymer of ethylene tetrafluoride and perfluoroalkylvinyl ether (PFA, specific dielectric constant = 2.1), another fluoride resin of CYTOP (registered trade mark of a product, available from ASAHI Glass K.K.: specific dielectric constant = 2.1), another fluoride resin of polytetrafluoroethylene (PTFE, specific dielectric constant = 2.1), polyphenylene ether (specific dielectric constant = 2.6), polyethylene (specific dielectric constant = 2.2), or the like. Further, each of the insulating layers 4a and 4b is formed to have a film thickness of 100 µm or more.

In the following paragraphs, a situation wherein the electrically-conductive foreign particle or piece 10 is intruded into the inside space of the metal enclosure 1 in the thus configured gas-insulated switchgear of the first embodiment will be described.

In case where a linear metal piece of electrically-conductive foreign particle or piece 10 of a short wire shape or the like, is on the bottom inner surface of the metal enclosure 1 as shown by FIG.1, when a high voltage is applied to the lead conductors 2, the electrically-conductive foreign particles 10 behaves first to erect itself in accordance with Coulomb's law. FIG.2 is a cross-sectional front view showing such state that the electrically-conductive foreign particle or piece 10 travels through the metal enclosure 1 and then adheres to the insulating layer 4 coated on the surface of the insulation spacer 3. When the electrically-conductive foreign particles 10 adheres to the insulation spacer 3 in the direction of the electric field, an electric field locally concentrates on the vicinity of the electrically-conductive foreign particle 10 and a surface discharge is liable to occur along its surface. When the insulating layer 4 is formed with the material having a low specific dielectric constant as described in the above, the localized concentration of the electric field on the surface of the insulating layer, to which the electrically-conductive foreign particle 10 adheres, is relaxed and thus the occurrence of the surface discharge over the surface of the insulation layer 4 is effectively suppressed.

It is theoretically known that in case where a linear metal piece is contacting to a planer part of a solid insulator in an insulating gas atmosphere, the resultant electric field at the point of contact between the metal piece and the insulator is approximately proportional to the square of the specific dielectric constant of the solid insulator. Therefore, by coating the insulation spacer 3 with the insulating layer 4 made of a material having a low specific dielectric constant as in the case of this first embodiment, it is possible to greatly relax the concentration of the electric field around the adhering electrically-conductive foreign particle 10.

In addition, since the insulation spacer 3 is made of the material of excellent mechanical strength, for instance, epoxy resin, the gas-insulated switchgear of the first embodiment has excellent mechanical strength and excellent electrical performance. Furthermore, since the above-mentioned advantage can be obtained only by coating an insulation spacer of the same configuration as that had been employed in the prior art apparatus with the insulating layer 4, it is possible to easily convert the prior art gas-insulated switchgears into the present invention gas-insulated switchgears having the excellent insulation performance with minimum expense.

### 〈〈EXAMPLE 2〉〉

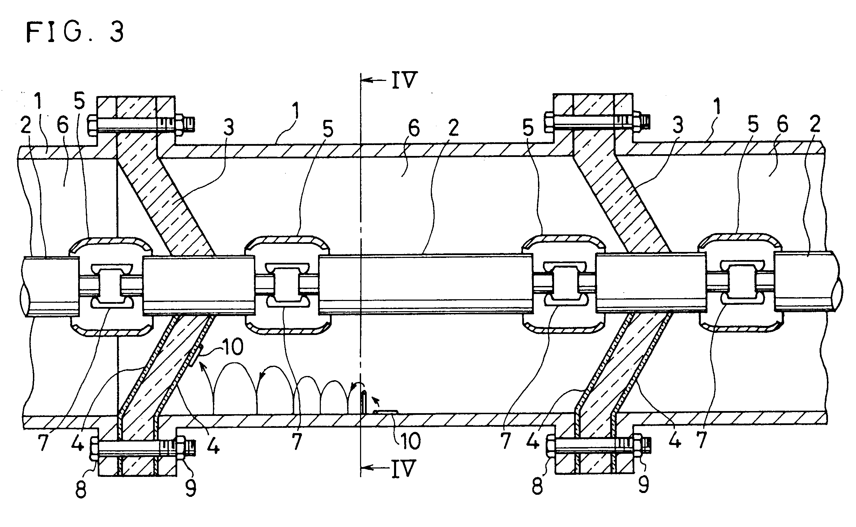

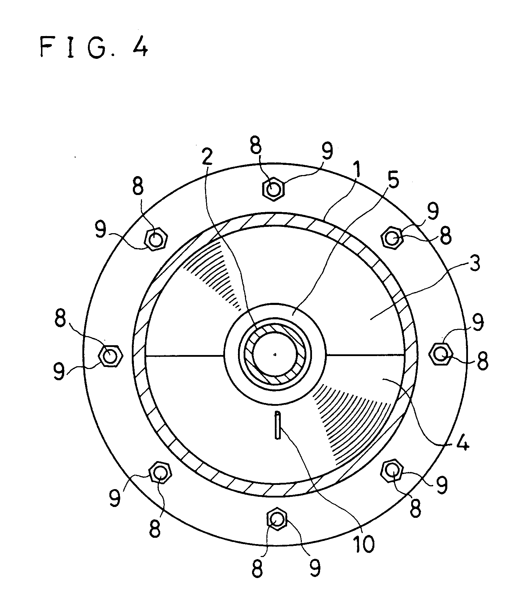

In the following paragraphs, a gas-insulated switchgear built in accordance with a second embodiment of the present invention will be described by referring to FIGs 3 and 4. FIG.3 is a cross-sectional side view of a gas-insulated switchgear built in accordance with a second embodiment of the present invention; and FIG.4 is a cross sectional front view of the gas-insulated switchgear shown by FIG.3 along a plane including the line IV - IV of FIG.3. In FIGs.3 and 4, the parts and components having the same configuration and function as those in the first embodiment will be referred to by the same reference symbols, and the description therefor will be omitted because they are similarly applicable to the second embodiment.

In the gas-insulated switchgear of the second embodiment. the insulating layers 4 having the same composition as that in the above-mentioned first embodiment are coated on particular parts of the surface of the insulation spacers 3 as the insulation supporting member, to which the electrically-conductive foreign particle 10 that has been intruded into the interior space of the metal enclosure 1 is liable to behaves to adhere. That is, in this second embodiment, only the lower halves of the insulation spacers 3 are coated with the insulating layers 4 as shown by FIGs.3 and 4. Since the insulating layers 4 are provided only on the particular sectors which are liable to be adhered by the electrically-conductive foreign particle 10 in the gas-insulated switchgear of the second embodiment, it is possible to construct a gas-insulated switchgear which can be manufactured with a lower cost than that of the above-mentioned switchgear of the first embodiment. Concerning the electrical performance, the surface discharge attributable to the localized concentration of the electric field are suppressed similarly to the previous embodiment.

Although the above descriptions of the first and second embodiments are limited to the gas-insulated switchgears of the single phase enclosure type, the present invention can similarly be applicable to the gas-insulated switchgears of the three phase enclosure type, for instance, to an apparatus employing insulating spacers of the three phase enclosure type, maintaining a similar advantage as those in the above-mentioned first and second embodiments.

### 〈〈EXAMPLE 3〉〉

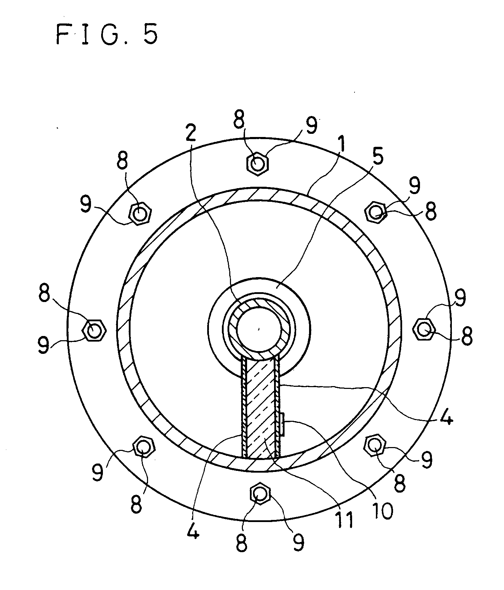

In the following paragraphs, a gas-insulated switchgear built in accordance with a third embodiment of the present invention will be described by referring to FIG.5. FIG.5 is a cross sectional front view of the gas-insulated switchgear built in accordance with the third embodiment. In FIG.5, the parts and components having the same configuration and function as those in the previously-described first and second embodiments will be referred to by the same reference symbols and the description therefor will be omitted, because they are similarly applicable to the third embodiment.

As shown by FIG.5, in this third embodiment, the lead conductor 2 is secured to the metal enclosure 1 while being insulated from the latter by an insulated supporting member of generally column shape, for instance a solid insulated supporting member (insulation column) 11 made of an epoxy resin. The insulating layers 4 composed of the same material as that has been employed in the previously-described first and second embodiment are coated on the surfaces of the solid insulated supporting members 11. Therefore, even if the electrically-conductive foreign particle 10 intrudes into the inside space of the metal enclosure 1 and adheres to the solid insulated supporting members 11 coated with the insulating layers 4, the concentration of the electric field around the adhering site is relaxed by the presence of the insulating layer 4. Hence the occurrence of the surface discharge is suppressed accordingly.

Although the gas-insulated switchgear built in accordance with this third embodiment is described on the case wherein each of the solid insulated supporting members 11 is of single leg type, advantages similar to those in the third embodiment are obtained for modified versions with the solid insulation supporting member of double leg type or triple leg type.

### 〈〈EXAMPLE 4〉〉

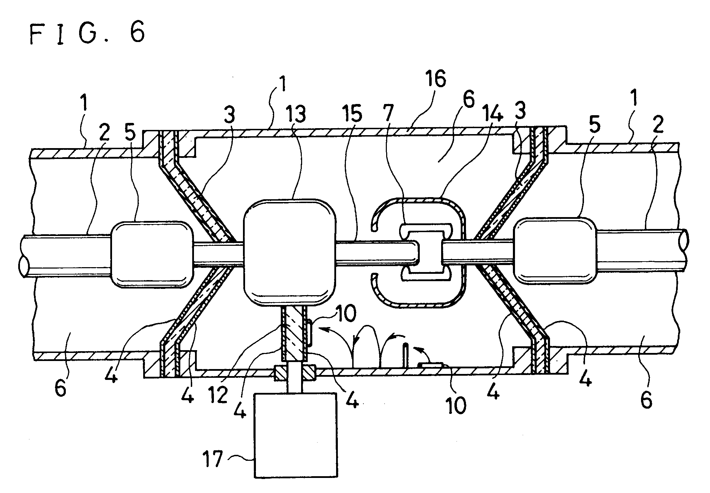

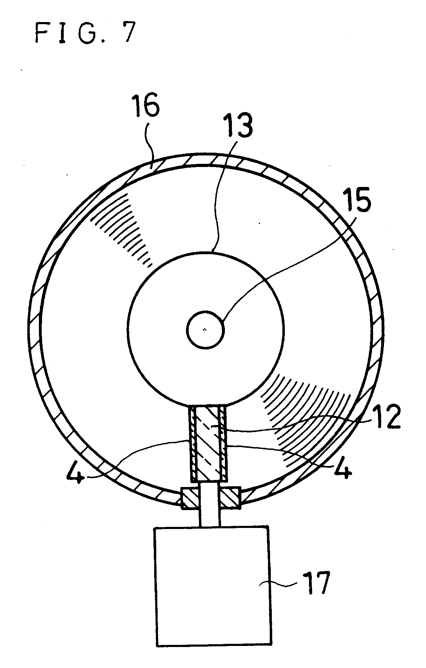

In the following paragraphs, a gas-insulated switchgear built in accordance with a fourth embodiment of the present invention will be described by referring to FIGs.6 and 7. FIG.6 is a cross-sectional side view of a gas-insulated switchgear built in accordance with the fourth embodiment of the present invention, while FIG.7 is a cross sectional front view of the gas-insulated switchgear shown by FIG.6. In FIGs.6 and 7, the parts and components having the same configuration and function as those in the first embodiment will be referred to by the same reference symbols and the description therefor will be omitted, because they are similarly applicable to the fourth embodiment.

In a disconnecting switch 16, which is a switching unit in the gas-insulated switchgear of the fourth embodiment, a moving part 13 and a stationary part 14 are electrically connected to the each other isolated left lead conductor 2 and right lead conductor 2, respectively. This disconnecting switch 16 is configured in a manner that a movable contact 15 of the previously-described moving part 13 is slid substantially horizontally by manipulating an outside driving unit 17 and that this movable contact 15 touches or separates from the contact fingers 7 of the stationary part 14. The driving manipulation of the outside driving unit 17 is transmitted to the previously-described movable contact 15 through an insulated manipulation rod 12 composed of an insulator, for instance, an epoxy resin. Around the surface of the insulated manipulation rod 12, there is a coating of an insulating layer 4 composed of a material having a lower specific dielectric constant than the specific dielectric constant held by the material constituting the insulated manipulation rod 12.

The material having a lower specific dielectric constant may be exemplified as a fluoride resin of a copolymer of ethylene tetrafluoride and perfluoroalkylvinyl ether (PFA specific dielectric constant = 2.1), another fluoride resin of CYTOP (registered trade mark of a product, available from ASAHI Glass K.K.: specific dielectric constant = 2.1), another fluoride resin of polytetrafluoroethylene (PTFE, specific dielectric constant = 2.1), polyphenylene ether (specific dielectric constant = 2.6), polyethylene (specific dielectric constant = 2.2), or the like, Further, each of the insulating layers 4a and 4b is formed to have a film thickness of 100 µm or more.

Similar to the gas-insulated switchgear of the previously-described first embodiment, the surfaces of the insulation spacers 3, which are the insulated supporting members, are also coated with the insulating layer 4. The insulating layer 4 is, for instance, a fluoride resin and improves the electrical performance of the disconnecting switch of the fourth embodiment similarly to the case of the previously-described first embodiment. Therefore, the disconnecting switch 16 built in accordance with this fourth embodiment has an advantage that a surface discharge hardly occurs in the vicinity of the adhered spot even when the electrically-conductive foreign particle 10 intruded into the inside space of the metal enclosure 1 adheres the insulating layer 4 on the surfaces of the insulated manipulation rod 12 and/or of the insulation spacers 3.

Although the above description of the fourth embodiment is limited to the disconnecting switch of the single phase enclosure type, the present invention can similarly be applicable to the gas-insulated switchgears of the three phase enclosure type, for instance, disconnecting switches, circuit breakers and grounding switches and has similar advantages as that in the above-mentioned fourth embodiments.

### 〈〈EXAMPLE 5〉〉

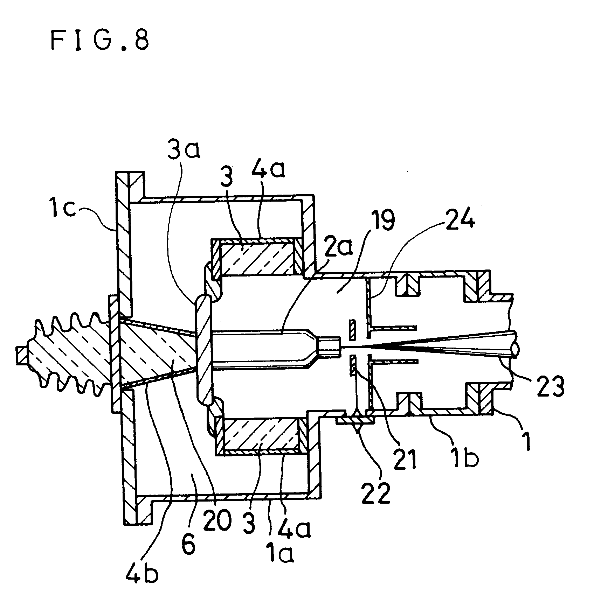

In the following paragraphs, a gas-insulated ion accelerator built in accordance with a fifth embodiment of the present invention, which is also one of its gas-insulated apparatus, will be described with reference to FIG.8. This gas-insulated ion accelerator has a function of accelerating ions to have a desired energy and is used in forming semiconductors and the like devices. FIG.8 is a cross-sectional side view showing the gas-insulated ion accelerator of the fifth embodiment. In FIG.8, the parts and components having the substantially same function as those in the previously-described gas-insulated switchgear of the first embodiment will be referred to by the same reference symbols and the description therefor will be omitted, because they are similarly applicable to the fifth embodiment.

In the gas-insulated ion accelerator of this embodiment, a hermetically-sealed metal enclosure (defined by 1c, 1a, 1b) has a shape of a stepped dual-diameter cylinder, and accommodates a small chamber 19 in its large diameter region (1a). The small chamber 19 is kept in vacuum and defined by an insulation spacer 3 of generally cylindrical shape, which is coaxial with the metal enclosure 1, and an end piece 3a of the spacer 3. The small chamber 19 also extends into an end part of the small diameter region (1b) of the metal enclosure, and terminated by an apertured partition wall 24.

In the small chamber 19, there is provided a high voltage electrode 2a which is also coaxial with the metal enclosure (1c, 1a, 1b) and directly supported by the end piece 3a of the insulation spacer 3, which connects the cylindrical spacer 3 with an insulation bushing 20 for high voltage application. There is also provided a bias electrode 21 having an aperture for emitting an ion beam 23 therethrough. The insulation bushing 20 has a generally column shape and is projecting inwards from an end wall 1c of the metal enclosure. Thus, the insulation spacer 3 and the insulation bushing 20 support the high voltage electrode 2a in a state spaced apart and insulated from the metal enclosure (1c, 1a, 1b).

A high voltage is applied to said high voltage electrode 2a for actuating said high voltage electrode 2a to serve as a source for generating ion. The ion beam 23 generated from the high voltage electrode 2a and emitting from this small chamber 19, through the apertures of the bias electrode 21 and the partition wall 24, is controlled by adjusting a voltage applied to the bias electrode 21, which is supplied from an outside means through a hermetically-sealed terminal 22 provided on a side wall of the small diameter region (1b) of the metal enclosure.

In the thus configured gas-insulated ion accelerator of the fifth embodiment, if the insulation spacer 3, 3a and the insulation bushing 20 are made only of a material having a high specific dielectric constant, such as an epoxy resin, and when an electrically-conducting foreign particle 10 adheres to the surface of these components, an electric field concentration would be induced in the vicinity of the adhered spot, and the voltage breakdown performance of these insulating spacer 3 and the bushing 20 would be remarkably deteriorated. In order to prevent the deterioration of the voltage breakdown performance, insulating layers 4a and 4b each having a lower specific dielectric constant than the specific dielectric constant of the material for forming the insulating spacer 3 and the insulation bushing 20 are coated on the surfaces of these components 3 and 20 as in a similar manner as the previously-described first embodiment.

As the material for the insulating layers 4a and 4b, there is employed one selected from a fluoride resin of a copolymer of ethylene tetrafluoride and perfluoroalkylvinyl ether (PFA, specific dielectric constant = 2.1), another fluoride resin of CYTOP (registered trade mark of a product, available from ASAHI Glass K.K.: specific dielectric constant = 2.1), another fluoride resin of polytetrafluoroethylene (PTFE, specific dielectric constant = 2.1), polyphenylene ether (specific dielectric constant = 2.6), polyethylene (specific dielectric constant = 2.2), or the like. Further, each of the insulating layers 4a and 4b is formed to have a film thickness of 100 µm or more.

### 〈〈EXAMPLE 6〉〉

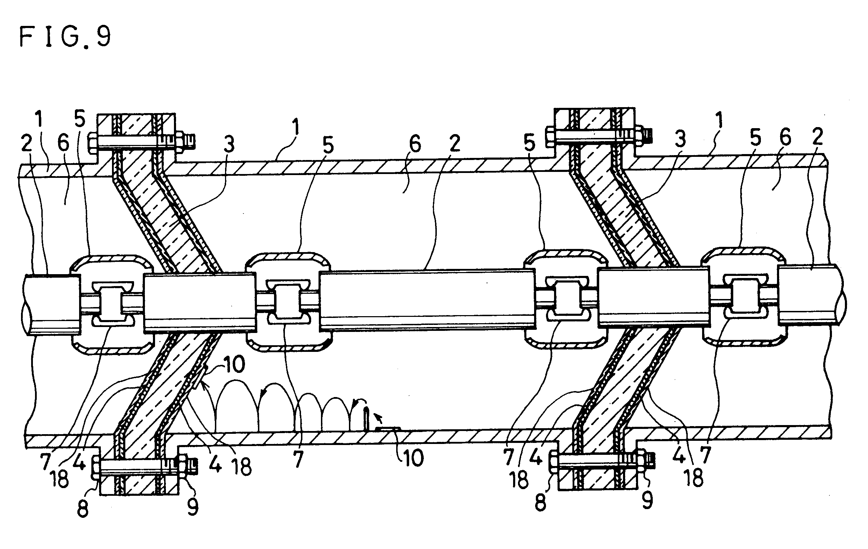

In the following paragraphs, a gas-insulated switchgear built in accordance with a sixth embodiment of the present invention, will be described by referring to FIG.9. FIG.9 is a longitudinal cross-sectional side view of the gas-insulated switchgear built in accordance with the sixth embodiment. In FIG.9, the parts and components having substantially the same configuration and function as those in the previously-described gas-insulated switchgear of the first embodiment will be referred to by the same reference symbols, and the description therefor will be omitted, because they are similarly applicable to this sixth embodiment.

In the gas-insulated switchgear of the sixth embodiment which is analogous to the first embodiment, a plurality of insulating layers, for instance first insulating layers 4 and an overrinding second insulating layer 18 coat one over the other on the surface of the insulation spacers 3, instead of the single insulation layer 4 of the first embodiment. Both the laminated first and the second insulating layers 4 and 18, which together form a composite insulating layer and are of a material having a lower specific dielectric constant than the specific dielectric constant of the material forming the insulating spacers 3, for instance, an epoxy resin.

As the material for forming these first and second insulating layers 4 and 18, there is employed one member selected from the group consistin of fluoride resin of a copolymer of ethylene tetrafluoride and perfluoroalkylvinyl ether (PFA, specific dielectric constant = 2.1), another fluoride resin of CYTOP (registered trade mark of a product, available from ASAHI Glass K.K.: specific dielectric constant = 2.1), another fluoride resin of polytetrafluoroethylene (PTFE, specific dielectric constant = 2.1), polyphenylene ether (specific dielectric constant = 2.6), polyethylene (specific dielectric constant = 2.2) and mixture thereof furthermore, these plurality of insulating layers 4 and 18 are formed in a manner that the outer siede (at a further location) a given insulating layer is from the surface of the epoxy resin insulation spacers 3, the lower the specific dielectric constant of the given insulating layer is. In other words, they are laminated in a decreasing order of the specific dielectric constant held by each of the layers, as their locations are farer from the surface of the insulation spacers 3. The total film thickness of these plural insulating layers 4 and 18 is 100 µm or more.

By configuring as previously mentioned, it is possible to eliminate the detrimental effect of the epoxy resin component having a high specific dielectric constant, and to make the electric field distribution in the vicinity of the insulating spacers 3 uniform. Therefore, even when the electrically-conducting foreign particle 10 which has intruded into the inside space of the metal enclosure 1 adheres to the insulating spacer 3, the electric field concentration in the vicinity of the adhered spot of the electrically-conducting foreign particle 10 can be relaxed and thus the deterioration in the voltage breakdown performance of the insulating spacers 3 can effectively be suppressed.

Although the above illustration on the apparatus of the sixth embodiment shows the laminated plural insulating layers 4 and 18 formed on the insulation spacers 3 of similar shape as that of the first embodiment, a similar technical advantage as that of the sixth embodiment can be obtained with other types apparata, such as the apparata as previously-described second, third, fourth and fifth embodiment, by similarly providing the laminated plural insulating layers 4 and 18 on these apparata.

### 〈〈EXAMPLE 7〉〉

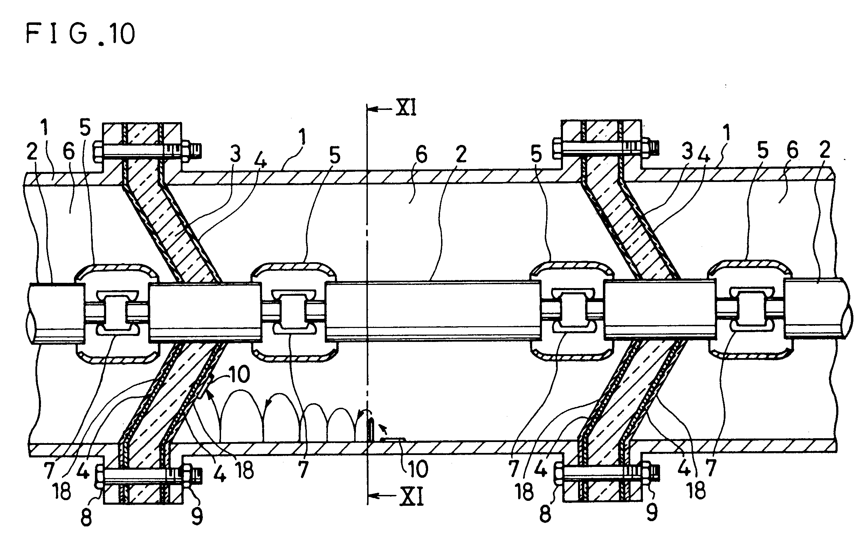

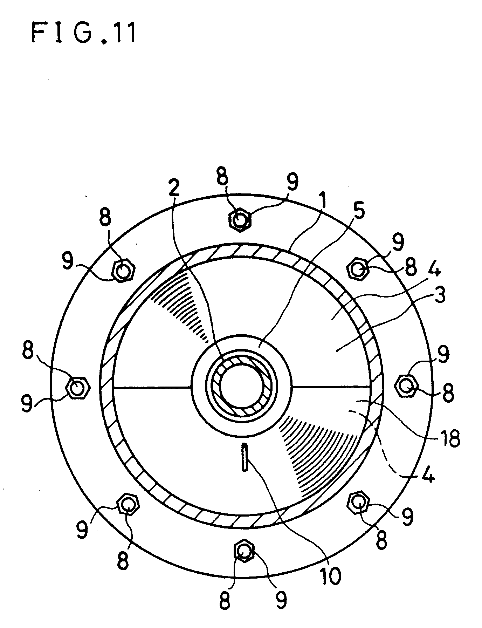

In the following paragraphs, a gas-insulated switchgear built in accordance a seventh embodiment of the present invention will be described by referring to FIG.10 and FIG.11. FIG.10 is a longitudinal cross-sectional side view of the gas-insulated switchgear built in accordance with the seventh embodiment, and FIG.11 is a cross sectional front view of the gas-insulated switchgear shown by FIG.10, cut along a plane including the line XI - XI of FIG.10. In FIG.10 and FIG.11, the parts and components having substantially the same configuration and function as those in the previously-described second embodiment will be referred to by the same reference symbols. And the duplicated description therefor will be omitted, because the descriptions on the second embodiment will be similarly applicable to the seventh embodiment.

In the gas-insulated switchgear of the seventh embodiment, which is analogous to the second and sixth embodiments, first insulating layers 4 having the same composition as the first insulating layers 4 in the above-mentioned sixth embodiment are coated entirely on the surfaces of the insulation spacers 3 made of the epoxy resin. Further, second insulating layers 18 having the same composition as the second insulating layers 18 in the above-mentioned sixth embodiment are applied on the particular sectors of the surface of the first insulating layers 4 on the insulation spacers 3, to which the electrically-conducting foreign particle 10 intruding into the interior space of the metal enclosure 1 is liable to adhere. That is, in this gas-insulated switchgear of the seventh embodiment, only approximately the lower halves of the insulation spacers 3 are coated with the second insulating sub-layers 18, as shown by FIG.10 and FIG.11.

The second insulating sub-layers 18 are provided only on approximately the particular sectors which are liable to be adhered by the electrically-conducting foreign particle 10 in the gas-insulated switchgear of the seventh embodiment. Accordingly, it is possible to construct a gas-insulated switchgear with a lower cost than that of the sixth embodiment. Concerning the electrical performance, the surface discharge, which is attributable to the localized concentration of the electric field induced by adhesion of electrically-conducting foreign particles 10 to the insulation spacers 3, are effectively suppressed similarly to the previous embodiment.

Although the present invention has been described in terms of the presently preferred embodiments, it is to be understood that such disclosures is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A gas insulated apparatus comprising:
a hermetically-sealed metal enclosure kept substantially to the ground potential and filled with an insulating gas,
a plurality of lead conductors accommodated in the inside space of said hermetically-sealed metal enclosure for being applied with a high voltage,
a plurality of insulated supporting members secured to said hermetically-sealed metal enclosure, for supporting said lead conductors in a state spaced apart and insulated from said metal enclosure, and
a plurality of insulating layers each of which has a lower specific dielectric constant than that of said insulated supporting members and coats at least a part of the surface of the insulated supporting members.

2. The gas-insulated apparatus in accordance with claim 1, wherein
said gas-insulated apparatus is a gas-insulated switchgear having said plurality of insulated supporting members.

3. The gas-insulated apparatus in accordance with claim 2, wherein
said insulating layers coat on the surfaces of the lower halves of the insulated supporting members.

4. The gas-insulated apparatus in accordance with claim 1, wherein
said gas-insulated apparatus is a gas-insulated switchgear having said insulated supporting members, and further comprising:
at least one switching unit accommodated in the inside space of said hermetically-sealed metal enclosure and connected to said lead conductors, for making and breaking a current path to said lead conductors,
at least one insulated manipulation rod connected to said switching unit, for driving said switching unit from the outside of said hermetically-sealed metal enclosure, and
at least one insulating layer having a specific dielectric constant which is lower than that of the material for forming said insulated manipulation rod, coating at least a part of the surface of the insulated manipulation rod.

5. The gas-insulated apparatus in accordance with claim 1, 2, 3 or 4 wherein
said gas-insulated apparatus is a gas-insulated switchgear having said insulated supporting members, and
each of said insulating layers comprises a plural layers which are of materials having a lower specific dielectric constants than the specific dielectric constant of the material for forming said insulated supporting members and are laminated one over another on at least a part of the surface of said insulated supporting members.

6. The gas-insulated apparatus in accordance with claim 5 wherein
said plural insulating layers are laminated one over the other on at least part of the surface of the insulated supporting members in a manner that, the farther a location of a given layer from the surface of the insulated supporting member is, the lower is the specific dielectric constant of the given layer.

7. The gas-insulated apparatus in accordance with claim 5 or 6, wherein
said gas-insulated apparatus is a gas-insulated switchgear having said insulated supporting members, and
ones of said plural insulating layers coats the entire surface of insulated supporting members and the others of said insulating layer coat the surfaces of the lower halves of the insulated supporting members.

8. The gas-insulated apparatus in accordance with claim 1, 2, 3, 4, 5, 6 and 7 wherein
said hermetically-sealed metal enclosure is a plurality of cylindrical unit metal enclosures axially connected with one another.

9. The gas-insulated apparatus in accordance with claim 8, wherein
said plurality of lead conductors are arranged linearly along an approximate center line of said cylindrical unit metal enclosures.

10. The gas-insulated apparatus in accordance with claim 1, 2, 3, 4, 5, 6 or 7, wherein
said insulated supporting members are insulation spacers each having a disc shape and secured to said hermetically-sealed metal enclosure at their circumferences, for supporting said lead conductors at their centers.

11. The gas-insulated apparatus in accordance with claim 1, 2, 3, 4, 5, 6 or 7, wherein
said insulated supporting members are solid insulated supporting members each having a column shape, secured to said hermetically-sealed metal enclosure at their proximal ends, for supporting said lead conductors at their distal ends.

12. A gas-insulated apparatus, which is an ion accelerator comprising:
a hermetically-sealed metal enclosure kept substantially to the ground potential and filled with an insulating gas,
a small chamber kept in vacuum, and accommodated in the inside space of said hermetically-sealed metal enclosure,
an ion generating means, including a high voltage electrode for serving as an ion source, and a bias electrode for controlling an ion beam emitted from said high voltage electrode, accommodated in said small chamber,
insulated supporting members, for supporting said high voltage electrode in a state spaced apart and insulated from said metal enclosure, and
a plurality of insulating layers each of which has a lower dielectric constant than that of said insulated supporting members and coats at least a part of the surface of the insulated supporting members.

13. The gas-insulated ion accelerator in accordance with claim 12, wherein
said insulated supporting member comprises;
an insulation spacer of generally cylindrical shape, for surrounding said high voltage electrode in a state spaced apart and insulated from said metal enclosure, and
an insulation bushing of generally column shape projecting inwards from an end wall of the metal enclosure, for directly supporting said high voltage electrode in said small chamber.

14. The gas-insulated ion accelerator in accordance with claim 12 or 13 wherein
each of said insulating layers comprises plural layers, which are of materials having a lower specific dielectric constants than the specific dielectric constant of the material for forming said insulated supporting members and are laminated one over another on at least a part of said surface of the insulated supporting members.

15. The gas-insulated apparatus in accordance with claim 14 wherein
said plural insulating layers are laminated one over the other on at least part of the surface of the insulated supporting member in a manner that, the farther a location of a given layer from the surface of the insulated supporting member is, the lower is the specific dielectric constant of the given layer.
